# EUROPÄISCHE PATENTSCHRIFT

(11) **EP 3 489 128 B1**
(45) Veröffentlichungstag und Bekanntmachung des Hinweises auf die Patenterteilung: **04.06.2025**
(21) Anmeldenummer: 17204181.6
(22) Anmeldetag: 28.11.2017
(51) Int. Cl.: B63H 25/38

(54) **RUDERBLATT MIT MODULAREM AUFBAU, SEGMENT FÜR EIN RUDERBLATT ODER FÜR EINE VORRICHTUNG ZUR PROPULSIONSVERBESSERUNG UND VERFAHREN ZUR HERSTELLUNG EINES RUDERBLATTS**
BLADE OF AN OAR WITH MODULAR STRUCTURE, SEGMENT FOR A BLADE OF AN OAR FOR A DEVICE FOR IMPROVING PROPULSION AND METHOD FOR PRODUCING A BLADE OF AN OAR
SAFRAN DE GOUVERNAIL À CONSTRUCTION MODULAIRE, SEGMENT POUR UN SAFRAN DE GOUVERNAIL OU POUR UN DISPOSITIF D'AMÉLIORATION DE LA PROPULSION ET PROCÉDÉ DE FABRICATION D'UN SAFRAN DE GOUVERNAIL

(43) Veröffentlichungstag der Anmeldung: 29.05.2019
(73) Patentinhaber: Becker Marine Systems GmbH, 21079 Hamburg (DE)
(72) Erfinder: Lehmann, Dirk, 21079 Hamburg (DE); Blümel, Herbert, 21079 Hamburg (DE)
(74) Vertreter: RGTH

(56) Entgegenhaltungen:
- EP-A1- 1 921 005
- EP-A1- 2 060 485
- EP-A1- 2 990 325
- DE-A1- 102014 101 120
- DE-T2- 69 300 070
- FR-A- 1 128 161
- JP-A- H 037 695
- JP-A- H0 314 793
- US-A1- 2005 076 819
- US-A1- 2016 319 668

## Beschreibung

Die vorliegende Erfindung betrifft ein Ruderblatt für ein Ruder eines Wasserfahrzeuges, insbesondere für ein Schiff. Ferner betrifft die vorliegende Erfindung ein Segment für ein Ruderblatt oder für eine Vorrichtung zur Propulsionsverbesserung sowie ein Verfahren zur Herstellung eines Ruderblatts.

### Stand der Technik

Wasserfahrzeuge, insbesondere Schiffe, weisen zur Änderung der Fahrtrichtung ein meist am Heck angeordnetes Ruder auf. Ein Ruder für ein Wasserfahrzeug umfasst ein Ruderblatt, welches mittels eines Ruderschafts drehbar am Schiffskörper gelagert ist. Ruderblätter, insbesondere für Halbschweberuder oder Vollschweberuder für Wasserfahrzeuge, wie Containerschiffe, Öltanker, Trawler, Schlepper, Fähren oder Passagierschiffe, weisen ein hohes Gesamtgewicht auf. Bei großen Schiffen wie Containerschiffen oder Öltankern kann das Gesamtgewicht des Ruders deutlich über 100 Tonnen betragen. Auch bei kleineren Schiffen wie Trawlern, Schleppern oder Fähren kann ein Gewicht im zweistelligen Tonnenbereich erreicht werden.

Aus der EP 1 921 005 B1 ist ein Ruder für Schiffe mit Propellerantrieb bekannt, bei welchen der Propeller um eine Propellerachse drehbar angeordnet ist, mit einem Ruderblatt und einem an dem Ruderblatt angeordneten Strömungskörper, wobei der birnenförmig oder zeppelinförmig ausgebildete Strömungskörper in Verlängerung der Propellerachse im Bereich des Ruderblattes angeordnet ist und bei erhöhter Kraft-, Schlag-, Stoß- oder Druckeinwirkung selbstzerstörend oder selbstauflösend ausgebildet ist.

Die FR 1 128 161 A offenbart ein Ruderblatt mit einem feststehenden, zweiteiligen Ruderschaft. Die beiden Abschnitte des Ruderschafts sind an einem Nabenelement angebunden. Das Nabenelement ist mit einer ebenfalls nicht verschwenkbaren Metallverblendung abgedeckt.

Aus der US 2016/0319668 A1 ist ein Ruder bekannt, wobei ein Oberflächenbereich des Ruders mit einer strukturierten Oberfläche versehen ist, die den durch eine Hochgeschwindigkeitsströmung eines Fluids mit abrasiven Partikeln hervorgerufenen Verschleiß oder die Erosion der Oberfläche reduziert. Die strukturierte Oberfläche umfasst eine Vielzahl von Rillen. Die Rillen werden von der Hochgeschwindigkeitsströmung der abrasiven Partikel kontaktiert und verändern oder unterbrechen die Strömung des Fluids und der abrasiven Partikel und verringern dadurch die Oberflächenverschleißrate oder die Erosion der Vorderkante der Struktur.

Die JP H03-14793 A offenbart ein Ruder für Schiffe welches eine Vielzahl von zwischen Platten angeordneten vertikalen Spanten aufweist, und dessen Seitenflächen mit Ruderplatten bedeckt sind.

Aus der JP H03-7695 A ist ein Schiffsruder bekannt, bei dem ein zylindrischer Grundkörper und ein zylindrischer Körper an der Vorderkante durch eine vorgeformte obere Platte und eine untere Platte eng eingespannt sind.

In der US 2005/0076819 A1 wird ein Verfahren zur Verringerung der Kavitation von Unterwasser-Tragflächen beschrieben, bei dem in ein Tragflächenprofil Perforationen eingebracht werden.

Ruderblätter werden in bekannter Weise durch Verschweißen einer Beplankung beziehungsweise Außenwandung mit einer inneren Skelett- oder Spantenstruktur hergestellt. Ein Ruderblatt teilt sich in mehrere Abschnitte auf. Ein erster Ruderblattabschnitt kann ein Hauptabschnitt des Ruderblatts sein, welcher insbesondere eine Ruderblattnabe zur Anbindung an einen Ruderschaft aufweist. Ein weiterer Ruderblattabschnitt kann als ein vorderer Ruderblattabschnitt ausgebildet sein und eine Anströmkante des Ruderblatts umfassen. Ferner umfasst ein Ruderblatt einen hinteren Ruderblattabschnitt, welcher eine Endleiste des Ruderblatts oder eine endseitig anlenkbar befestigte Ruderflosse aufweist. Der hintere Ruderblattabschnitt kann dabei als Teil des Hauptabschnitts ausgebildet sein.

Der vordere Ruderblattabschnitt ist im am Schiffskörper angeordneten Zustand des Ruderblatts bezüglich einer Vorwärtsfahrtrichtung des Schiffes vorne, der hintere Ruderblattabschnitt oder die Ruderflosse ist im am Schiffskörper angeordneten Zustand des Ruderblatts bezüglich der Vorwärtsfahrtrichtung des Schiffes hinten angeordnet. Ein Ruderblatt kann darüber hinaus weitere Ruderblattabschnitte aufweisen, wie beispielsweise einen Zwischenabschnitt, welcher bevorzugt in Vorwärtsfahrtrichtung des Schiffes gesehen zwischen dem vorderen Ruderblattabschnitt und dem hinteren Ruderblattabschnitt und bevorzugt unter dem Hauptabschnitt und oberhalb eines Ruderblattsohlenabschnitts angeordnet ist. Im am Schiff angeordneten Zustand entspricht die Vorwärtsfahrtrichtung einer Längsrichtung des Ruderblatts.

Insbesondere bei großen Ruderblättern für Vollschweberuder oder Halbschweberuder, also Ruderblättern, welche größer sind als Ruderblätter für Kleinstruder, wie beispielsweise für Jollen oder Segelboote, ist die Herstellung des Ruderblatts durch Beplanken einer Skelett- oder Spantenstruktur aufwändig. Darüber hinaus sind durch bekannte Verfahren herstellbare Ruderblätter sehr schwer. Hinzu kommt, dass die Abschnitte eines Ruderblatts unterschiedlichen Festigkeits- und Stabilitätsanforderungen unterliegen, welche mit bekannten Herstellungsverfahren nicht ohne Abstriche bezüglich des Endgewichts eingehalten werden können. Zudem müssen insbesondere Vollschwebe- oder Halbschweberuder für mittelgroße oder große Schiffe individuell und somit kostenintensiv konstruiert werden. Ein weiteres bekanntes Problem besteht darin, dass die Anströmkanten von Ruderblättern aufgrund wechselnder Radien mittels herkömmlicher Schweißverfahren schwierig herzustellen sind.

### Darstellung der Erfindung: Aufgabe, Lösung, Vorteile

Der vorliegenden Erfindung liegt die Aufgabe zugrunde, ein Ruderblatt bereitzustellen, welches ein geringeres Gewicht aufweist, einfacher und kostengünstiger herzustellen ist, den unterschiedlichen Festigkeits- und Stabilitätsanforderungen an verschiedene Ruderblattabschnitte gerecht wird, welches zumindest teilweise automatisiert hergestellt werden kann und bei welchem die Herstellung von unregelmäßigen Oberflächen, insbesondere der Anströmkante, erleichtert ist. Ferner ist es Aufgabe der vorliegenden Erfindung ein Segment für ein Ruderblatt oder für eine Vorrichtung zur Propulsionsverbesserung, sowie ein Verfahren zur Herstellung eines Ruderblatts oder eines Ruderblattsegments bereitzustellen, mit dem die vorgenannten Vorteile erzielt werden.

Zur Lösung der Aufgabe wird ein Ruderblatt vorgeschlagen, wobei das Ruderblatt einen modularen Aufbau aufweist, wobei das Ruderblatt mindestens zwei vorgefertigte Ruderblattsegmente umfasst und aus den mindestens zwei vorgefertigten Ruderblattsegmenten zusammengesetzt ist, wobei das Ruderblatt einen Hauptabschnitt zur Anbindung an einen Ruderschaft und einen vorderen Ruderblattabschnitt mit einer Anströmkante aufweist, wobei der Hauptabschnitt ein erstes Ruderblattsegment ist und wobei der vordere Ruderblattabschnitt ein zweites Ruderblattsegment ist, wobei der Hauptabschnitt aus einem anderen Material besteht und durch ein anderes Herstellungsverfahren hergestellt ist als der vordere Ruderblattabschnitt, und wobei der vordere Ruderblattabschnitt bionische Strukturen aufweist, wobei die bionischen Strukturen ausgebildet sind, einen Strömungswiderstand zu senken.

Da das Ruderblatt mindestens zwei vorgefertigte Ruderblattsegmente umfasst und aus diesen zusammengesetzt ist, können die einzelnen Ruderblattsegmente der mindestens zwei Ruderblattsegmente vor dem Zusammensetzen zu dem erfindungsgemäßen Ruderblatt separat oder unabhängig angefertigt werden. Die daher bezüglich ihres Gewichts und ihrer im Vergleich zum fertigen Ruderblatt kleineren Abmessungen vorteilhafter ausgebildeten Ruderblattabschnitte können mit kleiner dimensionierten und somit kostengünstigeren Fertigungsstraßen hergestellt werden. Die Ruderblattsegmente können zudem besser an die jeweils für sie geltenden Stabilitäts- und Festigkeitsanforderungen angepasst werden. Darüber hinaus können die einzelnen Ruderblattsegmente beispielsweise durch Verwendung unterschiedlicher Herstellungstechniken oder unterschiedlicher Materialien hinsichtlich ihres Gewichtes optimiert werden. Ein Zusammensetzen eines Ruderblatts aus vorgefertigten Ruderblattsegmenten hat darüber hinaus den Vorteil, dass gegebenenfalls einzelne Ruderblattsegmente zumindest teilweise automatisiert hergestellt werden können. Die Segmentierung des Ruderblatts erlaubt ferner die Verwendung von Herstellungsverfahren, mit welchen im Stand der Technik schwierig herzustellende, insbesondere unregelmäßige, Oberflächen, wie beispielsweise Anströmkanten, hergestellt werden können, ohne bei anderen Ruderblattabschnitten auf die Vorteile anderer Herstellungsverfahren verzichten zu müssen.

Bevorzugt ist das Ruderblatt für ein Ruder eines großen Schiffes, beispielsweise eines Containerschiffes, eines Öltankers oder eines Passagierschiffes, vorgesehen. Besonders bevorzugt ist die Ruderfläche des Ruderblatts größer als 50 m², weiter bevorzugt größer als 70 m², insbesondere bevorzugt größer als 90 m², ganz besonders bevorzugt größer als 100 m².

Weiter bevorzugt weist das erfindungsgemäße Ruderblatt ein Gewicht von mehr als 50 t, bevorzugt mehr als 70 t, insbesondere bevorzugt mehr als 90 t, auf.

Bevorzugt ist das Ruderblatt als ein Ruderblatt für ein Vollschwebe- oder Halbschweberuder ausgebildet.

Erfindungsgemäß ist vorgesehen, dass das Ruderblatt einen Hauptabschnitt und einen vorderen Ruderblattanschnitt mit einer Anströmkante aufweist und dass der Hauptabschnitt ein erstes Ruderblattsegment ist und dass der vordere Ruderblattabschnitt ein zweites Ruderblattsegment ist.

In dem Ruderblatt kann der Hauptabschnitt ein zentraler Ruderblattabschnitt sein, welcher insbesondere zur Anbindung eines Ruderschaft oder einer Ruderanlage ausgebildet ist. So kann der zentrale Ruderblattabschnitt oder der Hauptabschnitt eine Ruderblattnabe zum Anschluss des Ruderblatts an einen Ruderschaft aufweisen. Der Hauptabschnitt kann auch als "Main Piece" oder "zentraler Ruderblattabschnitt" bezeichnet werden. Auch die Bezeichnung "Rudder blade structure connected with solid parts" für den Hauptabschnitt ist möglich.

Der vordere Ruderblattabschnitt umfasst die Anströmkante des Ruderblatts und befindet sich im am Schiff angeordneten Zustand bezüglich einer Vorwärtsfahrtrichtung zumindest teilweise vor dem Hauptabschnitt des Ruderblatts. Der vordere Ruderblattabschnitt kann jedoch auch zumindest teilweise unterhalb des Hauptabschnitts angeordnet sein. Ist das Ruderblatt aus zwei Ruderblattsegmenten, einem ersten Ruderblattsegment und einem zweiten Ruderblattsegment zusammengesetzt, so ist der Hauptabschnitt identisch mit dem ersten Ruderblattsegment und der vordere Ruderblattabschnitt ist identisch mit dem zweiten Ruderblattsegment. Weiter bevorzugt kann der Hauptabschnitt beziehungsweise das erste Ruderblattsegment auch den hinteren Ruderblattabschnitt beziehungsweise die Endleiste des hinteren Ruderblattabschnitts oder eine am Ruderblatt befestigbare oder befestigte Ruderflosse umfassen.

In einer nicht von der Erfindung umfassten Ausführungsform müssen der Hauptabschnitt und der vordere Ruderblattabschnitt nicht identisch mit dem ersten Ruderblattabschnitt und dem zweiten Ruderblattabschnitt ausgebildet sein. Beispielsweise können der Hauptabschnitt und/oder der vordere Ruderblattabschnitt mehrere Ruderblattsegmente aufweisen oder ein Ruderblattsegment ist Teil sowohl des Hauptabschnitts als auch des vorderen Ruderblattabschnitts.

Da für den Hauptabschnitt und für den vorderen Ruderblattabschnitt eines Ruderblatts unterschiedliche Festigkeits- und Stabilitätsanforderungen einzuhalten sind, ist es besonders vorteilhaft, dass der Hauptabschnitt ein erstes Ruderblattsegment ist und dass der vordere Ruderblattabschnitt ein zweites Ruderblattsegment ist, wobei das erste Ruderblattsegment nicht Teil des vorderen Ruderblattabschnitts und das zweite Ruderblattsegment nicht Teil des Hauptabschnitts ist.

Somit können sowohl der Hauptabschnitt als auch der vordere Ruderblattabschnitt entsprechend den jeweils geltenden Festigkeits- und Stabilitätsanforderungen frei geformt beziehungsweise konstruiert und gegebenenfalls mit verschiedenen Herstellungsverfahren hergestellt werden. Dies ermöglicht eine einfache Montage, eine Reduktion der Herstellungskosten, des Gewichts und des benötigten Materials. Weiterhin ermöglicht die modulare Bauweise mit einem ersten Ruderblattsegment und einem zweiten Ruderblattsegment eine zumindest teilweise Automatisierung der Herstellung eines Ruderblatts.

Bevorzugt kann vorgesehen sein, dass das Ruderblatt einen hinteren Ruderblattabschnitt mit einer Endleiste aufweist, dass das Ruderblatt mindestens drei vorgefertigte Ruderblattsegmente umfasst und aus den mindestens drei vorgefertigten Ruderblattsegmenten zusammengesetzt ist, wobei der hintere Ruderblattabschnitt ein drittes Ruderblattsegment umfasst oder ist.

Ferner kann bevorzugt vorgesehen sein, dass das Ruderblatt einen Zwischenabschnitt aufweist, dass das Ruderblatt mindestens vier vorgefertigte Ruderblattsegmente umfasst und aus den mindestens vier vorgefertigten Ruderblattsegmenten zusammengesetzt ist, wobei der Zwischenabschnitt ein viertes Ruderblattsegment umfasst oder ist.

Wenn der Hauptabschnitt des Ruderblatts nicht den hinteren Ruderblattabschnitt und/oder die Endleiste umfasst, so kann ein eigenständiger hinterer Ruderblattabschnitt vorgesehen sein. Im am Schiffskörper angeordneten Zustand und bezüglich einer Vorwärtsfahrtrichtung des Schiffes befindet sich somit der vordere Ruderblattabschnitt zumindest teilweise vor dem Hauptabschnitt und der Hauptabschnitt befindet sich zumindest teilweise vor dem hinteren Ruderblattabschnitt. Der vordere Ruderblattabschnitt kann dabei auch einen Ruderblattsohlenabschnitt umfassen, welcher sich unter dem Hauptabschnitt und gegebenenfalls unter dem hinteren Ruderblattabschnitt erstreckt. Der Ruderblattsohlenabschnitt ist bevorzugt in etwa senkrecht zu der Anströmkante ausgerichtet. "In etwa senkrecht" ist dabei so zu verstehen, dass der Winkel zwischen der Anströmkante und dem Ruderblattsohlenabschnitt zwischen 60° und 90°, bevorzugt zwischen 70° und 90°, insbesondere zwischen 80° und 90°, beträgt. Der Winkel kann auch genau 90° betragen.

Ist zudem ein Zwischenabschnitt vorgesehen, so kann dieser aus einem vierten Ruderblattsegment geformt oder hergestellt sein. Der Zwischenabschnitt kann auch "Semi-flat Piece" genannt werden. Der vordere Ruderblattabschnitt kann auch "Curved Piece" genannt werden und der hintere Ruderblattabschnitt kann auch "Flat Piece" genannt werden.

In einer grob schematisierten Seitenansicht des Ruderblatts kann das Ruderblatt die folgende Struktur aufweisen. Der vordere Ruderblattabschnitt, umfassend die Anströmkante und einen Ruderblattsohlenabschnitt, ist in etwa L-förmig ausgebildet. In einem am Schiff angeordneten Zustand und bezüglich der Vorwärtsfahrtrichtung des Schiffes gesehenen Richtung befindet sich der Hauptabschnitt hinter dem vorderen Ruderblattabschnitt und oberhalb des Ruderblattsohlenabschnitts. Bezüglich der Vorwärtsfahrtrichtung gesehen ist der hintere Ruderblattabschnitt hinter dem Hauptabschnitt angeordnet. Der hintere Ruderblattabschnitt befindet sich dabei ebenfalls oberhalb des Ruderblattsohlenabschnitts des vorderen Ruderblattabschnitts. Der Zwischenabschnitt ist in der Längsrichtung des Ruderblatts gesehen hinter dem vorderen Ruderblattabschnitt und vor dem hinteren Ruderblattabschnitt und in vertikaler Richtung gesehen unterhalb des Hauptabschnitts und oberhalb des Ruderblattsohlenabschnitts des vorderen Ruderblattabschnitts angeordnet. Der L-förmig ausgebildete vordere Ruderblattabschnitt, der hintere Ruderblattabschnitt und der Hauptabschnitt umschließen den Zwischenabschnitt.

Prinzipiell können jedoch auch mehr als vier Ruderblattabschnitte oder Ruderblattsegmente vorgesehen sein.

Bevorzugt sind die mindestens zwei Ruderblattsegmente und/oder die Ruderblattabschnitte miteinander verbunden, wobei die Verbindung durch Kleben, Schweißen, Formschluss oder einer Kombination dieser Verfahren erfolgt. Insbesondere bevorzugt ist das zweite Ruderblattsegment und/oder der vordere Ruderblattabschnitt mit mindestens einem weiteren Ruderblattsegment und/oder Ruderblattabschnitt durch eine Klebeverbindung oder durch eine Kombination einer Klebeverbindung mit einem Formschluss verbunden. Der Formschluss kann durch eine Klickverbindung oder durch eine Verbindung mit einer Profilleiste erfolgen. Für die Verbindung der mindestens zwei Ruderblattsegmente und/oder der Ruderblattabschnitte können für jeden Verbindungsbereich verschiedene Verbindungsverfahren verwendet werden. So kann beispielsweise das erste Ruderblattsegment bzw. der Hauptabschnitt mit dem dritten und/oder vierten Ruderblattsegment, insbesondere mit dem hinteren Ruderblattabschnitt und/oder dem Zwischenabschnitt, durch Schweißen verbunden werden, während das zweite Ruderblattsegment, insbesondere der vordere Ruderblattabschnitt, mit den anderen Ruderblattsegmenten bzw. Ruderblattabschnitten durch Kleben oder durch Kleben mit Formschluss verbunden wird.

Vorteilhafterweise kann vorgesehen sein, dass mindestens ein Ruderblattsegment der mindestens zwei Ruderblattsegmente ein anderes Material umfasst und/oder aus einem anderen Material besteht und/oder durch ein anderes Herstellungsverfahren hergestellt ist als mindestens ein weiteres Ruderblattsegment der mindestens zwei Ruderblattsegmente, wobei erfindungsgemäß vorgesehen ist, dass der Hauptabschnitt aus einem anderen Material besteht und durch ein anderes Herstellungsverfahren hergestellt ist, als der vordere Ruderblattabschnitt.

Durch die Verwendung unterschiedlicher Materialien und Herstellungsverfahren für die einzelnen Ruderblattsegmente können die spezifischen Festigkeits- und Stabilitätsanforderungen an die einzelnen Ruderblattabschnitte beziehungsweise Ruderblattsegmente erfüllt werden. Darüber hinaus kann eine Automatisierung des Herstellungsverfahrens des Ruderblatts erreicht werden.

Bevorzugt weist der vordere Ruderblattabschnitt, insbesondere das zweite Ruderblattsegment, einen Ruderblattsohlenabschnitt auf, und/oder der vordere Ruderblattabschnitt weist eine Propulsionsbirne auf.

Der vordere Ruderblattabschnitt, insbesondere das zweite Ruderblattsegment, kann einen Ruderblattsohlenabschnitt aufweisen und in einer Seitenansicht in etwa L-förmig ausgebildet sein, wobei der Ruderblattsohlenabschnitt bezüglich einer Vorwärtsfahrtrichtung des Schiffes gesehen nach hinten gerichtet und im unteren Bereich der Anströmkante des vorderen Ruderblattabschnitts angeordnet ist. Insbesondere geht die Anströmkante in einer Rundung über einen Radius in den Ruderblattsohlenabschnitt über.

Bevorzugt ist vorgesehen, dass der Hauptabschnitt, insbesondere das erste Ruderblattsegment, und/oder der vordere Ruderblattabschnitt, insbesondere das zweite Ruderblattsegment, und/oder der hintere Ruderblattabschnitt, insbesondere das dritte Ruderblattsegment, und/oder Zwischenabschnitt, insbesondere das vierte Ruderblattsegment, eine gekrümmte Außenwandung umfasst.

Weiter bevorzugt kann vorgesehen sein, dass der hintere Ruderblattabschnitt, insbesondere das dritte Ruderblattsegment, eine ebene Außenwandung umfasst.

Insbesondere der hintere Ruderblattabschnitt, beziehungsweise das dritte Ruderblattsegment, welcher bzw. welches die Endleiste umfasst, kann dabei eine ebene Außenwandung aufweisen. So kann der hintere Ruderblattabschnitt zwei ebene und zur Endleiste aufeinander in einer Aufsicht in etwa V-förmig zulaufende Seitenwände umfassen. Die Endleiste verläuft entlang der Berührlinie der beiden ebenen Seitenwände. Wird der hintere Ruderblattabschnitt als ein drittes Ruderblattsegment vorgefertigt, so kann eine Automatisierung der Herstellung eines Ruderblattes ermöglicht werden, da sich die ebenen Seitenwände aufgrund des Fehlens von nur aufwändig herzustellenden gekrümmten Außenflächen besonders zur automatisierten Herstellung eignen.

Dennoch ist es auch möglich, dass die Außenwandung des hinteren Ruderblattabschnitts, insbesondere des dritten Ruderblattsegments, zumindest teilweise gekrümmt ist oder einen Knick aufweist oder geknickt ist.

Vorteilhafterweise ist mindestens ein Ruderblattsegment, insbesondere das erste Ruderblattsegment, eine Schweißkonstruktion mit Querspanten und Längsspanten.

So kann der Hauptabschnitt eine Schweißkonstruktion mit Quer- und Längsspanten sein. Entsprechend kann der Hauptabschnitt, beziehungsweise das erste Ruderblattsegment, mit einem bekannten Herstellungsverfahren durch Bereitstellung einer Skelett- oder Spantenstruktur aus Quer- und Längsspanten und durch Beplankung der Spanten- oder Skelettstruktur mit einer Außenwandung hergestellt werden. Ein solches Herstellungsverfahren eignet sich insbesondere um die auf den Hauptabschnitt wirkenden Stabilitäts- und Festigkeitsanforderungen zu erfüllen. Der Hauptabschnitt, beziehungsweise das erste Ruderblattsegment, weist bevorzugt eine Ruderblattnabe zum Anschluss des Ruderblatts an einen Ruderschaft auf. Entsprechend wird über den Hauptabschnitt ein Großteil der Ruderkräfte abgeleitet. Entgegen aus dem Stand der Technik bekannten Rudern ist jedoch bevorzugt nur der Hauptabschnitt beziehungsweise das erste Ruderblattsegment als eine Schweißkonstruktion mit Quer- und Längsspanten ausgebildet, während das zweite Ruderblattsegment und gegebenenfalls die weiteren Ruderblattsegmente mit anderen Herstellungsverfahren hergestellt werden.

Bevorzugt kann vorgesehen sein, dass mindestens ein Ruderblattsegment, insbesondere das zweite Ruderblattsegment, mit einem Fräsverfahren hergestellt ist. Auch kann vorgesehen sein, dass mindestens ein Ruderblattsegment, insbesondere das zweite Ruderblattsegment, als eine Faserverbundteil oder ein Laminatbauteil ausgebildet ist.

In einer besonders bevorzugten Ausführungsform ist vorgesehen, dass mindestens ein Ruderblattsegment, insbesondere das zweite Ruderblattsegment, mit einem generativen Fertigungsverfahren und/oder einem additiven Fertigungsverfahren, insbesondere mit einem 3D-Druckverfahren, hergestellt ist.

Generative Fertigungsverfahren beziehungsweise additive Fertigungsverfahren umfassen auch Verfahren, welche als Rapid-Prototyping-Verfahren bezeichnet werden. Bei generativen und additiven Fertigungsverfahren erfolgt die Fertigung vorzugsweise direkt auf Basis von rechnerinternen Datenmodellen und bevorzugt aus formlosen Flüssigkeiten, Geleen, Pasten, Pulvern oder formneutralen bandförmigen, drahtförmigen oder blattförmigen Materialien, mittels chemischer und/oder physikalischer Prozesse. Derartige generative oder additive Verfahren werden auch als 3D-Druckverfahren bezeichnet. Im Stand der Technik sind unterschiedlichste Ausgestaltungen für generative, additive oder 3D-Druckverfahren bekannt, zum Beispiel und in nicht abschließender Aufzählung Laserschmelzen, Elektronenstrahlschmelzen, Auftragsschweißen beziehungsweise Cladding, Stereolithographie, Laminated Object Modelling, 3D-Siebdruck und lichtgesteuerte elektrophoretische Abscheidung oder Fused Deposition Modelling.

Durch die Verwendung eines generativen oder additiven Fertigungsverfahrens für mindestens ein Ruderblattsegment, insbesondere für das zweite Ruderblattsegment, weiter insbesondere für den vorderen Ruderblattabschnitt, kann eine schnelle, automatisierte und kostengünstige Fertigung eines Ruderblattsegments, insbesondere des zweiten Ruderblattsegments, ermöglicht werden. Darüber hinaus können Ruderblattabschnitte relativ frei geformt werden. Ein weiterer Vorteil der Verwendung eines generativen, additiven oder 3D-Druckverfahrens besteht darin, dass im Stand der Technik relativ schwierig herzustellende Oberflächen, wie beispielsweise die Oberfläche einer Anströmkante oder unregelmäßige Oberflächen, leichter und kostengünstiger hergestellt werden können.

In einer bevorzugten Ausführungsform umfasst das Ruderblatt ein als Hauptabschnitt ausgebildetes erstes Ruderblattsegment sowie ein als vorderer Ruderblattabschnitt ausgebildetes zweites Ruderblattsegment, wobei das zweite Ruderblattsegment beziehungsweise der vordere Ruderblattabschnitt, einen Ruderblattsohlenabschnitt umfasst und in etwa L-förmig ausgebildet ist. Der Hauptabschnitt beziehungsweise das erste Ruderblattsegment ist in dem offenen Winkel des L-förmigen vorderen Ruderblattabschnitts, beziehungsweise des zweiten Ruderblattsegments, angeordnet und mit diesem zu einem Ruderblatt verbunden. Der Hauptabschnitt kann dabei in einem bekannten Herstellungsverfahren als eine Schweißkonstruktion mit Quer- und Längsspanten hergestellt werden, während der, insbesondere L-förmig ausgebildete, vordere Ruderblattabschnitt mit einem generativen, additiven oder 3D-Druckverfahren hergestellt ist. Das Ruderblatt kann zudem wie in vorbeschriebener Weise ferner noch weitere Ruderblattabschnitte, wie einen hinteren Ruderblattabschnitt oder einen Zwischenabschnitt, umfassen, welche ebenfalls Ruderblattsegmente umfassen oder sind.

In einer weiter vorteilhaften Ausführungsform kann vorgesehen sein, dass mindestens ein Ruderblattsegment, insbesondere das dritte Ruderblattsegment, ein Leichtbauelement ist.

Vorteilhafterweise kann der hintere Ruderblattabschnitt das dritte Ruderblattsegment sein. Dementsprechend ist der hintere Ruderblattabschnitt als Leichtbauelement ausgebildet. Ferner ist der hintere Ruderblattabschnitt beziehungsweise das dritte Ruderblattsegment bevorzugt in Vorwärtsfahrtrichtung eines Schiffes gesehen hinter dem vorderen Ruderblattabschnitt und/oder hinter dem Hauptabschnitt angeordnet und kann darüber hinaus oberhalb eines Ruderblattsohlenabschnitts des vorderen, bevorzugt L-förmig ausgebildeten, Ruderblattabschnitts angeordnet sein.

Der hintere Ruderblattabschnitt, beziehungsweise das dritte Ruderblattsegment, eignet sich besonders dazu, als Leichtbauelement ausgebildet zu sein.

Bevorzugt kann das als Leichtbauelement ausgebildete Ruderblattsegment, insbesondere das dritte Ruderblattsegment, ein T-Wabenbauelement, ein Paneelbauelement oder ein Vollstahlwabenbauelement sein.

Ein T-Waben-Bauelement weist anstatt Spanten einer Spantenstruktur, insbesondere anstatt von waagerecht ausgerichteten Längsspanten, L- oder T-Profile auf, welche zu in einer Umfangsrichtung geschlossenen, in etwa kreisförmigen oder polygonförmigen oder N-eckförmigen, insbesondere achteckförmigen, Strukturelementen geformt sind.

Die gegenüberliegenden Seiten des N-Ecks oder Achtecks müssen nicht zwingend gleichlang sein, darüber hinaus müssen die Winkel zwischen den Seiten des N-Ecks auch nicht alle gleich sein. Die Flansche der T- oder L-Profile bilden die Außenfläche der Strukturelemente. Die Stege der T- oder L-Profile sind in Richtung eines von den Flanschen umschlossenen Innenbereich gerichtet und umranden eine Öffnung im Innenbereich des jeweiligen Strukturelements. An zwei gegenüberliegenden, von den Flanschen gebildeten Bereichen oder Seiten des Strukturelements sind die Seitenwände des Ruderblattsegments, insbesondere des dritten Ruderblattsegments, angeordnet.

Wenn der hintere Ruderblattabschnitt das dritte Ruderblattsegment ist und als T-Waben-Bauelement ausgebildet ist, so sind die Seitenwände, welche insbesondere eben ausgebildet sind, in einem Winkel zu einer Endleiste zusammenlaufend aneinander angeordnet und entlang der Endleiste miteinander verbunden oder verschweißt. Zwischen den in etwa V-förmig angeordneten Seitenwänden des hinteren Ruderblattabschnitts erstreckt sich anstatt der bekannten Spantenstruktur aus Quer- und Längsspanten ein Gerüst aus zu Strukturelementen geformten L- oder T-Profilen.

Ist das Ruderblattsegment, insbesondere das dritte Ruderblattsegment, weiter insbesondere der hintere Ruderblattabschnitt, ein Paneelbauelement, so wird dieses insbesondere durch die folgenden Herstellungsschritte hergestellt:
- Bereitstellen einer ersten Paneelplatte,
- Anordnen einer ersten Anzahl Verstärkungskörper auf der ersten Paneelplatte,
- Befestigen der ersten Anzahl Verstärkungskörper auf der ersten Paneelplatte zur Herstellung eines ersten Paneels,
- Bereitstellen einer zweiten Paneelplatte,
- Anordnen einer zweiten Anzahl Verstärkungskörper auf der zweiten Paneelplatte,
- Befestigen der zweiten Anzahl Verstärkungskörper auf der zweiten Paneelplatte zur Herstellung eines zweiten Paneels,
- Anordnen des ersten Paneels und des zweiten Paneels derart, dass die erste Paneelplatte und die zweite Paneelplatte eine Außenwand des herzustellenden Ruderblatts oder Ruderblattsegments bilden und dass die erste Anzahl Verstärkungskörper und die zweite Anzahl Verstärkungskörper in einen Innenraum des herzustellenden Ruderblatts oder Ruderblattsegmentes gerichtet sind,
- Verbinden des ersten Paneels und des zweiten Paneels.

Ein derartiges Paneelbauelement ist Gegenstand der europäischen Patentanmeldung "Verfahren zur Herstellung eines Ruderblatts oder eines Ruderblattsegments, Ruderblatt und Ruderblattsegment" der Anmelderin vom gleichen Anmeldetag wie die vorliegende Patentanmeldung.

Die Verstärkungskörper übernehmen in dem als Paneelbauelement ausgebildeten dritten Ruderblattsegment die Funktion einer Spantenstruktur aus Längs- und Querspanten. Die Verstärkungskörper dienen somit bevorzugt der Verstärkung beziehungsweise der Erhöhung der Stabilität oder der Festigkeit des Ruderblattsegments. Die Verstärkungskörper können bevorzugt Rippen und/oder Platten und/oder Spanten, insbesondere Quer- und/oder Längsspanten, und/oder Teilstücke von Spanten, insbesondere Teilstücke von Quer- und/oder Längsspanten, sein.

Die Paneele können weiter bevorzugt mit einem Schweißverfahren, insbesondere einem Roboterschweißverfahren, hergestellt werden.

Die einzelnen Paneele können auf einer Paneelfertigungsstraße hergestellt werden und dann durch Anordnen zu einem hinteren Ruderblattabschnitt beziehungsweise zu einem dritten Ruderblattsegment zusammengefügt werden. Hierdurch werden eine weitere Automatisierung des Herstellungsverfahrens und eine Kostensenkung erzielt.

Ist das Ruderblattsegment, insbesondere das dritte Ruderblattsegment, als Vollstahlwabenbauelement ausgebildet, so befindet sich eine Wabenstruktur aus aneinander grenzenden Waben zwischen den Seitenwänden des dritten Ruderblattsegments. Die Wabenstruktur kann die Struktur von Bienenwaben aufweisen. Insbesondere erstrecken sich die Längsachsen der Waben zwischen den Seitenwänden. Bezüglich einer im am Schiff angeordneten Zustand senkrecht und in einer Längsrichtung, welche der Vorwärtsfahrtrichtung des Schiffes entspricht, des Ruderblattsegments ausgerichteten Mittelebene des Ruderblattsegments sind die Waben in etwa senkrecht ausgerichtet.

Bevorzugt ist die Anströmkante des vorderen Ruderblattabschnitts, insbesondere des zweiten Ruderblattsegments, eine twistierte oder versetzte Anströmkante.

Das Ruderblatt kann insbesondere als twistiertes Ruderblatt ausgebildet sein, welches einen oberen Ruderblattbereich und einen unteren Ruderblattbereich aufweist. Der obere Ruderblattbereich und der untere Ruderblattbereich weisen jeweils ein Profil mit einer Saugseite und einer Druckseite auf. Die Profilform ähnelt somit in etwa dem Profil eines Flugzeugflügels. Dabei ist das Profil im oberen Ruderblattbereich spiegelverkehrt, insbesondere bezüglich der Mittelebene des Ruderblatts, zu dem Profil im unteren Ruderblattbereich ausgerichtet. Bei einem twistierten Ruder ist die Anströmkante des vorderen Ruderblattabschnitts daher nicht durchgängig ausgebildet, sondern der Abschnitt der Anströmkante im oberen Ruderblattbereich, welcher im am Schiff angeordneten Zustand des Ruderblatts oberhalb der Propellernabe des Propellers des Schiffes liegt, ist gegenüber dem Abschnitt der Anströmkante im unteren Ruderblattbereich, welcher im am Schiff angeordneten Zustand unterhalb der Propellernabe des Propellers des Schiffes liegt, versetzt, und zwar derart, dass der obere Abschnitt der Anströmkante nach Steuerbord gerichtet oder twistiert oder versetzt ist, während der untere Abschnitt der Anströmkante, nach Backbord gerichtet oder twistiert oder versetzt ist. Je nach Rotationsrichtung des Propellers kann auch der obere Abschnitt der Anströmkante nach Backbord und der untere Abschnitt nach Steuerbord gerichtet oder twistiert oder versetzt sein. Mit anderen Worten, wenn sich im oberen Ruderblattbereich die Saugseite auf der Steuerbordseite befindet, so befindet sich im unteren Ruderblattbereich die Saugseite auf der Backbordseite oder umgekehrt. Entsprechend befindet sich die Druckseite im oberen Ruderblattbereich auf der Backbordseite und im unteren Ruderblattbereich auf der Steuerbordseite oder umgekehrt.

Erfindungsgemäß ist vorgesehen, dass der vordere Ruderblattabschnitt, insbesondere das zweite Ruderblattsegment, bionische Strukturen, insbesondere eine Oberfläche mit bionischen Strukturen, aufweist.

Eine bionische Struktur ist eine in der Natur, beispielsweise im Tier- oder Pflanzenreich auftretende Struktur, welche zur Erreichung eines bestimmten Zweckes oder Ziels im technischen Kontext auf technische Systeme übertragen wird.

Vorteilhaft ist vorgesehen, dass die bionische Struktur mit einem generativen Fertigungsverfahren und/oder einem additiven Fertigungsverfahren, insbesondere mit einem 3D-Druckverfahren, hergestellt ist.

Besonders bevorzugt ist die Oberfläche der Anströmkante des vorderen Ruderblattabschnitts, beziehungsweise des zweiten Ruderblattsegments, mit einer bionischen Struktur versehen. Besonders vorteilhaft ist, wenn das Ruderblattsegment, insbesondere das zweite Ruderblattsegment, weiter insbesondere der vordere Ruderblattabschnitt, umfassend die bionische Struktur in einem generativen, additiven oder 3D-Druckverfahren hergestellt wird. Derartige Herstellungsverfahren eignen sich besonders zur Herstellung von bionischen Strukturen. Insbesondere ist es bei aus dem Stand der Technik bekannten Herstellungsverfahren nicht kostengünstig möglich und darüber hinaus relativ schwierig, unregelmäßige Oberflächen, zum Beispiel mit wechselnden Radien oder mit bionischen Strukturen, herzustellen. Die bevorzugte Kombination von einem generativen oder additiven oder 3D-Druckverfahren mit der Bereitstellung von bionischen Oberflächenstrukturen, insbesondere bei einer Anströmkante eines vorderen Ruderblattabschnitts beziehungsweise eines zweiten Ruderblattsegments, erzielt somit den Vorteil der kostengünstigen Bereitstellung von bionischen Strukturen.

Die Oberfläche mit bionischen Strukturen kann jedoch auch durch ein materialabtragendes Verfahren, beispielsweise durch ein Fräsverfahren, oder durch ein Gussverfahren bereitgestellt werden. Weiterhin ist es auch möglich, die bionische Struktur mittels herkömmlicher Schweißverfahren herzustellen. Bevorzugt ist jedoch eine Herstellung der bionischen Struktur, insbesondere der bionischen Struktur der Anströmkante des zweiten Ruderblattsegments, durch ein additives, generatives oder 3D-Druckverfahren.

Darüber hinaus ist es selbstverständlich auch möglich, dass weitere Ruderblattsegmente bionische Oberflächenstrukturen aufweisen.

Mit weiterem Vorteil ist die bionische Struktur ausgebildet, einen Strömungsabriss hinauszuzögern. Ferner kann vorgesehen sein, dass die bionische Struktur eine Haihautstruktur ist und/oder dass die bionische Struktur eine Flossenstruktur, insbesondere eine Walflossenstruktur, ist.

Insbesondere bionische Strukturen, wie eine Haihautstruktur oder eine Flossenstruktur, sind besonders geeignet den Strömungswiderstand des Ruderblatts zu senken und/oder einen Strömungsabriss hinauszuzögern.

Zudem kann bevorzugt sein, dass mindestens eines der mindestens zwei Ruderblattsegmente, bevorzugt das erste Ruderblattsegment und/oder das zweite Ruderblattsegment und/oder das dritte Ruderblattsegment und/oder das vierte Ruderblattsegment, mindestens zwei Untersegmente umfasst.

Die Untersegmente können ebenfalls vorgefertigt sein und das mindestens eine Ruderblattsegment der mindestens zwei Ruderblattsegmente ist aus den mindestens zwei Untersegmenten zusammengesetzt. Das aus mindestens zwei Untersegmenten zusammengesetzte Ruderblattsegment wird dann mit weiteren Ruderblattsegmenten, welche ebenfalls Untersegmente umfassen oder aus diesen zusammengesetzt sein können, zu einem Ruderblatt zusammengesetzt. Beispielweise kann der Hauptabschnitt des Ruderblatts, insbesondere das erste Ruderblattsegment, aus zwei Untersegmenten zusammengesetzt sein. Bevorzugt ist ein erstes Untersegment des Hauptabschnitts beziehungsweise des ersten Ruderblattsegments im am Schiff angeordneten Zustand oberhalb der Propellernabe des Propellers des Schiffes angeordnet und ein zweites Untersegment des ersten Ruderblattsegments ist im am Schiff angeordneten Zustand unterhalb der Propellernabe des Propellers angeordnet. Dies bedeutet, dass das erste Untersegment sich im am Schiff angeordneten Zustand auch oberhalb des zweiten Untersegments befindet.

Insbesondere bei twistierten Rudern ist ein aus mindestens zwei Untersegmenten zusammengesetztes erstes Ruderblattsegment, beziehungsweise Hauptabschnitt, vorteilhaft. Das erste Untersegment ist dann bevorzugt im oberen Ruderblattbereich angeordnet, welcher bevorzugt eine nach Backbord oder Steuerbord twistierte, gerichtete oder versetzte Anströmkante umfasst, wohingegen das zweite Untersegment im unteren Ruderblattbereich, welcher eine in der Gegenrichtung nach Steuerbord oder Backbord twistierte, gerichtete oder versetzte Anströmkante umfasst, angeordnet ist. Durch die Ausbildung des mindestens einen Ruderblattsegments, insbesondere des ersten Ruderblattsegments oder des Hauptabschnitts, aus mindestens zwei Untersegmenten können die Herstellungskosten gesenkt und eine vereinfachte Herstellung des Ruderblatts erzielt werden. Zudem wird es in einfacher Weise möglich, einen oberen Ruderblattbereich und einen unteren Ruderblattbereich für ein twistiertes Ruder auszubilden.

Es können jedoch auch weitere Ruderblattsegmente, beispielsweise das zweite, das dritte, das vierte oder weitere Ruderblattsegmente mindestens zwei Untersegmente umfassen. So können beispielsweise auch der hintere Ruderblattabschnitt, der vordere Ruderblattabschnitt oder der Zwischenabschnitt aus mindestens zwei Untersegmenten zusammengesetzt sein.

Der vordere Ruderblattabschnitt, insbesondere das zweite Ruderblattsegment, welcher bevorzugt in etwa L-förmig ausgebildet ist und einen Ruderblattsohlenabschnitt aufweist, kann besonders bevorzugt mindestens zwei Untersegmente umfassen beziehungsweise aus mindestens zwei Untersegmenten zusammengesetzt sein. So ist es mit besonderem Vorteil möglich, dass der Ruderblattsohlenabschnitt aus mehreren, insbesondere in einem additiven, generativen oder 3D-Druckverfahren hergestellten Untersegmenten zusammengesetzt ist. Ein weiteres Untersegment kann als Propulsionsbirne ausgebildet sein.

Auch ist es möglich, dass der vordere Ruderblattabschnitt, insbesondere das zweite Ruderblattsegment, Untersegmente umfasst, wobei ein erstes Untersegment einen oberen Abschnitt der Anströmkante umfasst. Der obere Abschnitt der Anströmkante ist im am Schiff angeordneten Zustand oberhalb der Propellernabe angeordnet. Der obere Abschnitt der Anströmkante ist beispielsweise nach Steuerbord versetzt, twistiert oder gerichtet. Ein zweites Untersegment kann einen unteren Abschnitt der Anströmkante umfassen. Der untere Abschnitt der Anströmkante ist im am Schiff angeordneten Zustand unterhalb der Propellernabe angeordnet. Der untere Abschnitt der Anströmkante ist dann beispielsweise nach Backbord versetzt, twistiert oder gerichtet.

Weiter vorteilhaft kann vorgesehen sein, dass das erste Ruderblattsegment ein erstes Untersegment und ein zweites Untersegment aufweist und aus dem ersten Untersegment und dem zweiten Untersegment zusammengesetzt ist, wobei bevorzugt zwischen dem ersten Untersegment und dem zweiten Untersegment ein Verbindungskörper, insbesondere eine Stabilisierungsplatte, angeordnet ist.

Ein zwischen dem ersten Untersegment und dem zweiten Untersegment des ersten Ruderblattsegments angeordneter Verbindungskörper dient der Verbindung des ersten und des zweiten Untersegments und erhöht zudem die Stabilität des ersten Ruderblattsegments, insbesondere des Hauptabschnitts. Insbesondere bei einem twistierten Ruder, bei dem das erste Untersegment und das zweite Untersegment eine im Wesentlichen spiegelverkehrte Profilform aufweisen, ist das Vorsehen eines Verbindungskörpers wie einer Stabilisierungsplatte besonders vorteilhaft.

Eine nicht von der Erfindung umfasste Lösung des der Erfindung zugrundeliegenden Problems besteht in der Bereitstellung eines Ruderblattsegments eines vorbeschriebenen Ruderblatts.

Eine noch weitere, nicht von der Erfindung umfasste Lösung der Aufgabe besteht in der Bereitstellung eines Ruderblattsegments für ein vorbeschriebenes Ruderblatt, wobei das Ruderblattsegment ein vorderer Ruderblattabschnitt ist, wobei das Ruderblattsegment eine Anströmkante umfasst, wobei das Ruderblattsegment mit einem generativen Fertigungsverfahren und/oder einem additiven Fertigungsverfahren, insbesondere mit einem 3D-Druckverfahren, hergestellt ist, und wobei das Ruderblattsegment bionische Strukturen aufweist, wobei die bionischen Strukturen bevorzugt ausgebildet sind, einen Strömungswiderstand zu senken.

Das Segment kann ein Teil eines vollständige Ruderblatts oder einer vollständigen Vorrichtung zur Propulsionsverbesserung sein. Jedoch kann das Segment auch als vollständiges Ruderblatt oder als vollständige Vorrichtung zur Propulsionsverbesserung ausgebildet sein und insbesondere mit einem vollständigen Ruderblatt oder einer vollständigen Vorrichtung zur Propulsionsverbesserung identisch sein.

Bevorzugt ist das Segment jedoch ein vorderer Ruderblattabschnitt für ein vorbeschriebenes Ruder in modularer Bauweise.

Ferner kann das Segment auch ein Segment für eine Vorrichtung zur Propulsionsverbesserung sein. Derartige Vorrichtungen sind beispielsweise als Vordüsen, Kortdüsen, Mewis-Duct-Düsen oder Propellerdüsen ausgebildet. Vorrichtungen zur Verbesserung der Propulsionseigenschaften weisen ebenso wie Ruderblätter Anströmkanten auf. Ferner kann das Segment auch als Fin- oder Stabilisierungsflosse ausgebildet sein. Fins werden insbesondere in Düsen wie Kortdüsen, Mewis-Duct-Düsen, Vordüsen oder Propellerdüsen eingesetzt und sind in der Regel im Inneren der Düse angeordnet. Die Fins können jedoch auch auf der Außenseite der Düse angeordnet sein. Fins sind üblicherweise in radialer Richtung von einer zentralen Mittelachse in Richtung eines Düsenmantels oder von einer Außenwand des Düsenmantels der Düse nach außen gerichtet angeordnet. Ferner weisen Fins eine Profilform auf, welche dazu geeignet ist, eine Wasserströmung zu beeinflussen. Insbesondere sind Fins mit einer Saugseite und einer Druckseite ausgestattet. Mittels hinter einem Propeller angeordneten Fins kann eine Verwirbelung im Abstrom eines Propellers begradigt werden. Hierdurch kann Energie zurückgewonnen werden beziehungsweise die Propulsionseigenschaften können verbessert werden. Ferner können Fins auch vor dem Propeller angeordnet sein, insbesondere in einer Vordüse. Die Fins bewirken einen Vordrall in dem den Propeller anströmenden Wasser, wodurch ebenfalls Energie gespart und die Propulsionseigenschaften verbessert werden können. Auch Fins oder Stabilisierungsflossen weisen eine Anströmkante auf.

Besonders vorteilhaft ist es, wenn das Segment als Ruderblattsegment für einen vorderen Ruderblattabschnitt ausgebildet ist und eine Anströmkante aufweist. Derartige Ruderblattsegmente sind mit bekannten Verfahren nur schwer und kostenaufwändig herzustellen. Insbesondere ist es schwierig, eine Anströmkante mit wechselnden Radien mit bekannten Schweißverfahren herzustellen. Durch die Herstellung des Ruderblattsegments in einem additiven, generativen oder 3D-Druckverfahren lässt sich in einfacher und kostengünstiger Weise ein vorderer Ruderblattabschnitt mit einer Anströmkante, insbesondere mit wechselnden Radien, fertigen und unabhängig von Festigkeitsaspekten frei formen.

Ist das Segment als vorderer Düsenabschnitt ausgebildet, so ist die Anströmkante im Wesentlichen kreisförmig gebogen ausgebildeten.

Weiter vorteilhaft kann vorgesehen sein, dass das Segment ein Ruderblattsegment ist und eine Propulsionsbirne umfasst.

Die Propulsionsbirne kann als ein Untersegment vorgefertigt sein, beispielsweise in einem 3D-Druckverfahren, und mit einem weiteren, ebenfalls vorgefertigten Untersegment zu dem Ruderblattsegment, insbesondere für ein vorbeschriebenes Ruderblatt, zusammengesetzt werden. Das derart hergestellt Ruderblattsegment bildet vorteilhaft einen vorderen Ruderblattabschnitt eines vorbeschriebenen Ruderblattabschnitts aus.

Wenn das Segment ein vorderer Ruderblattabschnitt für ein vorbeschriebenes Ruder in modularer Bauweise ist, so können die im Folgenden erläuterten Ausführungsformen in entsprechender Weise auch auf den vorderen Ruderblattabschnitt, bzw. das zweite Ruderblattsegment, des vorbeschriebenen Ruderblatts übertragen werden.

Es ist dann vorgesehen, dass das Segment bionische Strukturen, insbesondere eine Oberfläche mit bionischen Strukturen, aufweist.

Die bionischen Strukturen sind ausgebildet, einen Strömungswiderstand zu senken, wobei die bionische Struktur bevorzugt eine Haihautstruktur ist und/oder wobei die bionische Struktur eine Flossenstruktur, insbesondere eine Walflossenstruktur, ist.

Derartige bionische Strukturen sind besonders geeignet, einen Strömungswiderstand zu senken.

Besonders bevorzugt ist die bionische Struktur auf einer Oberfläche einer Anströmkante angeordnet.

Ferner kann es bevorzugt sein, dass die bionischen Strukturen in einem generativen Fertigungsverfahren und/oder einem additiven Fertigungsverfahren, insbesondere in einem 3D-Druckverfahren, und/oder durch ein materialabtragendes Verfahren, insbesondere ein Fräsverfahren, und/oder durch ein Gussverfahren hergestellt sind.

Dabei ist es von besonderem Vorteil, wenn für die Herstellung der bionischen Strukturen des Segments ein generatives, additives oder 3D-Druckverfahren verwendet wird. Die Oberfläche des Segments, insbesondere der Anströmkante, weist bevorzugt bionische Strukturen auf. Das Segment ist in einem 3D-Druckverfahren oder einem additiven oder generativen Fertigungsverfahren hergestellt, wobei bei der Herstellung des Segmentes durch das additive, generative oder 3D-Druckverfahren auch die bionischen Strukturen, insbesondere auf der Anströmkante, hergestellt werden.

Mit weiterem Vorteil weist das Segment mindestens zwei Untersegmente auf, und/oder ist das Segment aus mindestens zwei Untersegmenten zusammengesetzt.

Durch das Zusammensetzen von, insbesondere vorgefertigten, Untersegmenten zu einem Segment für ein Ruderblatt oder für eine Vorrichtung zur Propulsionsverbesserung kann die Herstellung derartiger Segmente weiter vereinfacht und die Herstellungskosten gesenkt werden.

Besonders bevorzugt ist ein mindestens zwei Untersegmente aufweisendes oder aus mindestens zwei Untersegmenten zusammengesetztes Segment als ein zweites Ruderblattsegment für ein vorbeschriebenes Ruderblatt ausgebildet. Dieses zweite Ruderblattsegment kann als vorderer Ruderblattabschnitt für ein vorbeschriebenes modulares Ruderblatt ausgebildet sein und einen ersten oberen Bereich mit einer Anströmkante sowie einen unteren in etwa senkrecht zu dem ersten Bereich ausgerichteten zweiten Bereich aufweisen. Der zweite Bereich ist vorteilhafterweise ein Ruderblattsohlenabschnitt und geht in einem Radius in den ersten Bereich über und ist in etwa senkrecht zu dem ersten Bereich ausgerichtet, so dass das Ruderblattsegment in etwa L-förmig ausgebildet ist. "In etwa senkrecht" ist dabei so zu verstehen, dass der Winkel zwischen dem ersten oberen Bereich mit der Anströmkante und dem zweiten unteren Bereich, dem Ruderblattsohlenabschnitt, zwischen 60° und 90°, bevorzugt zwischen 70° und 90°, insbesondere zwischen 80° und 90°, beträgt. Der Winkel kann auch genau 90° betragen.

Wenn das Segment als Düsensegment für eine Düse ausgebildet ist, so können die Untersegmente eine Anströmkante oder Abschnitte einer Anströmkante aufweisen. Ein Untersegment des Düsensegments kann dabei einem Sechzehntel, einem Achtel, einem Viertel oder einem Halben oder auch dem vollen Umfang der Düse beziehungsweise einer Einlassöffnung der Düse entsprechen.

Besonders vorteilhaft ist es, wenn die Untersegmente miteinander verbunden sind, insbesondere mit einem Klickverschlusssystem, mittels Verkleben, Verschrauben oder Verschweißen.

Wenn die Untersegmente in einem generativen, additiven oder 3D-Druckverfahren herstellt sind, können diese besonders vorteilhaft ein Klickverschlusssystem aufweisen und mittels des Klickverschlusssystems zu einem Ruderblattsegment oder einem Düsensegment miteinander verbindbar sein.

Auch eine Verbindung der Untersegmente mittels Verkleben und/oder Verschrauben ist bei mit einem additiven, generativen oder 3D-Druckverfahren hergestellten Untersegmenten besonders vorteilhaft.

Ferner kann vorgesehen sein, dass das Segment als vorderer Ruderblattabschnitt ausgebildet ist und einen Ruderblattsohlenabschnitt aufweist.

Besonders bevorzugt ist vorgesehen, dass der Ruderblattsohlenabschnitt aus Untersegmenten zusammengesetzt ist.

Die Untersegmente des Ruderblattsohlenabschnitts können mit einem Klickverschlusssystem, mittels Verkleben, Verschrauben oder Verschweißen zusammengefügt werden.

In einer vorteilhaften Ausführungsform ist vorgesehen, dass die Untersegmente in etwa U-förmig ausgebildet sind und eine in einer Längsrichtung verlaufende Aussparung oder Nut zur Anbindung an ein weiteres Segment aufweisen.

Untersegmente, welche in etwa U-förmig ausgebildet sind, lassen sich besonders vorteilhaft zu einem Ruderblattsohlenabschnitt durch ein Klickverschlusssystem, durch Verkleben, Verschrauben oder Verschweißen zusammensetzen. Die Aussparung oder Nut dient bevorzugt zur Aufnahme eines weiteren Ruderblattsegments, wie beispielsweise eines vorbeschriebenen Hauptabschnitts oder eines vorbeschriebenen Zwischenabschnitts.

Dafür weist das entsprechende Ruderblattsegment eine zu der Aussparung oder zur Nut komplementäre Rippe oder einen Flansch oder eine Feder auf, welche in die Aussparung oder Nut eingreifen kann und insbesondere zu einem lateralen Formschluss führt. Das aus Untersegmenten zusammengefügte Ruderblattsegment, welches für einen vorderen Ruderblattabschnitt ausgebildet ist, kann durch Zusammenfügen mit den weiteren Ruderblattsegmenten zu einem Ruderblatt mit modularem Aufbau zusammengesetzt werden. Die Verbindung zwischen den weiteren Ruderblattsegmenten und dem Ruderblattsegment kann zudem zusätzlich oder alternativ mittels eine Klickverschlusssystem, mittels Verkleben, Verschweißen oder Verschrauben stattfinden.

Weiter vorteilhaft kann vorgesehen sein, dass die Untersegmente eine erste Stirnseite und eine zweite Stirnseite aufweisen, wobei in der ersten Stirnseite und der zweiten Stirnseite Verbindungsmittel angeordnet sind, zur Verbindung von jeweils zwei Untersegmenten an deren Stirnseiten.

Mit anderen Worten können die Untersegmente mit ihren Stirnseiten aneinandergefügt werden, derart, dass die Verbindungsmittel der ersten Stirnseite des ersten Untersegments und die Verbindungsmittel der zweiten Stirnseite des zweiten Untersegments miteinander in Verbindung treten oder in Verbindung gebracht werden, sodass die Untersegmente zu seinem Segment, insbesondere zu einem Ruderblattsegment, zusammengesetzt werden können.

Ferner kann vorgesehen sein, dass die Aussparung oder Nut nicht zentral im Untersegment verläuft.

Eine weitere Lösung des der Erfindung zugrundeliegenden Problems liegt in der Bereitstellung eines Verfahrens zur Herstellung eines vorbeschriebenen Ruderblatts in modularer Bauweise umfassend die Schritte:
- Anfertigen eines ersten Ruderblattsegments,
- Anfertigen eines zweiten Ruderblattsegments,
- Zusammenfügen mindestens des ersten Ruderblattsegments und des zweiten Ruderblattsegments,
wobei das erste Ruderblattsegment ein Hauptabschnitt eines Ruderblatts ist, und wobei das zweite Ruderblattsegment ein vorderer Ruderblattabschnitt ist, wobei der Hauptabschnitt aus einem anderen Material besteht und durch ein anderes Herstellungsverfahren hergestellt wird als der vordere Ruderblattabschnitt, und wobei das erste Ruderblattsegment in einem Schweißverfahren durch Beplankung einer Skelettstruktur aus Querspanten und Längsspanten hergestellt wird, und wobei dass das zweite Ruderblattsegment mit einem generativen Fertigungsverfahren und/oder einem additiven Fertigungsverfahren hergestellt wird, und wobei das zweite Ruderblattsegment bionische Strukturen aufweist, wobei die bionische Strukturen ausgebildet sind, einen Strömungswiderstand zu senken.

Ferner kann vorgesehen sein, dass zur Ausbildung eines Ruderblatts in modularer Bauweise weitere Ruderblattsegmente, insbesondere ein drittes und/oder ein viertes Ruderblattsegment mit dem ersten Ruderblattsegment und dem zweiten Ruderblattsegment zusammengefügt werden. Die Ruderblattsegmente können dabei entsprechend den vorbeschriebenen Ruderblattsegmenten, insbesondere den vorbeschriebenen Ruderblattsegmenten für ein modulares Ruderblatt, ausgebildet sein.

Weiter bevorzugt kann vorgesehen sein, dass ein drittes Ruderblattsegment ein hinterer Ruderblattabschnitt ist und/oder dass ein viertes Ruderblattsegment ein Zwischenabschnitt eines zu fertigenden Ruderblattes ist.

Weiter bevorzugt kann vorgesehen sein, dass das generative Fertigungsverfahren und/oder das additive Fertigungsverfahren ein 3D-Druckverfahren ist.

### Kurze Beschreibung der Figuren

Die vorliegende Erfindung wird nachstehend anhand der Figuren näher erläutert. Es zeigen
- Fig. 1: eine perspektivische Ansicht eines Ruderblatts mit modularem Aufbau,
- Fig. 2: eine Explosionsdarstellung eines Ruderblatts mit modularem Aufbau,
- Fig. 3: ein als vorderer Ruderblattabschnitt ausgebildetes Ruderblattsegment,
- Fig. 4: eine strukturierte Oberfläche mit bionischen Strukturen,
- Fig. 5: ein als Hauptabschnitt ausgebildetes Ruderblattsegment mit einem ersten Untersegment und einem zweiten Untersegment,
- Fig. 6: eine perspektivische Darstellung eines Untersegments für einen Ruderblattsohlenabschnitt,
- Fig. 7a: eine Vorderansicht eines Untersegments für einen Ruderblattsohlenabschnitt,
- Fig. 7b: eine Rückansicht eines Untersegments für einen Ruderblattsohlenabschnitt,
- Fig. 8a: Eine Aufsicht auf ein Untersegments für einen Ruderblattsohlenabschnitt, und
- Fig. 8b: eine Seitenansicht eines Untersegments für einen Ruderblattsohlenabschnitt.

### Ausführliche Beschreibung der Figuren

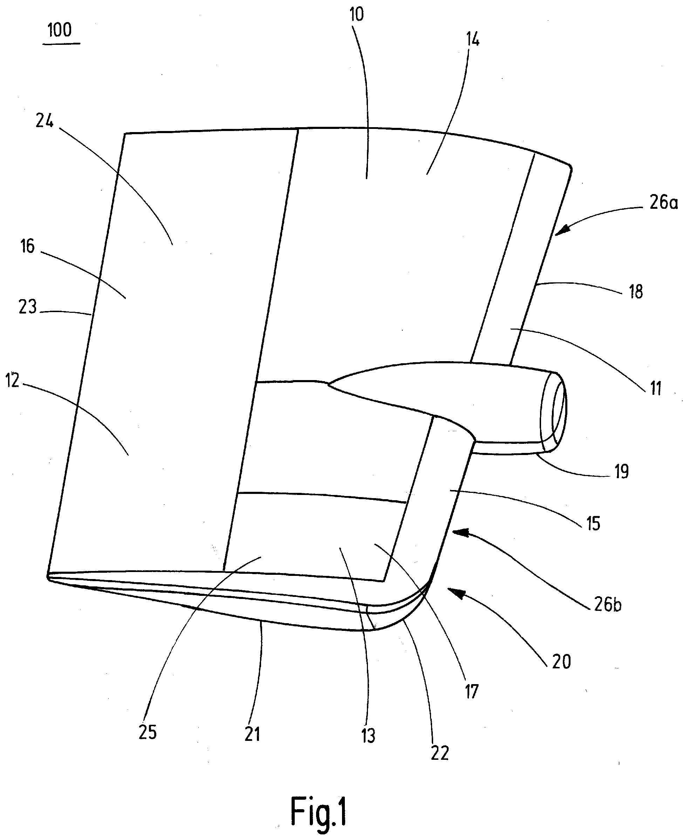

Fig. 1 zeigt eine perspektivische Ansicht eines Ruderblatts 100 mit einem modularen Aufbau. Das Ruderblatt 100 weist vorgefertigte Ruderblattsegmente 10, 11, 12, 13 auf und ist aus den Ruderblattsegmenten 10, 11, 12, 13 zusammengesetzt. Ein erstes Ruderblattsegment 10 ist als Hauptabschnitt 14 ausgebildet. Ein zweites Ruderblattsegment 11 ist als vorderer Ruderblattabschnitt 15 ausgebildet. Ein drittes Ruderblattsegment ist als hinterer Ruderblattabschnitt 16 ausgebildet. Ein viertes Ruderblattsegment 13 ist als Zwischenabschnitt 17 ausgebildet. Der vordere Ruderblattabschnitt 15 umfasst eine Anströmkante 18 sowie eine Propulsionsbirne 19. Das zweite Ruderblattsegment 11, beziehungsweise der vordere Ruderblattabschnitt 15, ist dabei in etwa L-förmig ausgebildet, wobei sich im unteren Bereich 20 ein Ruderblattsohlenabschnitt 21 anschließt. Der Ruderblattsohlenabschnitt 21 ist in etwa in einem rechten Winkel zu dem Abschnitt des zweiten Ruderblattsegments 11, an dem die Anströmkante 18 angeordnet ist, ausgerichtet und geht in diesen Abschnitt über einen Radius 22 über. Der Ruderblattsohlenabschnitt 21 kann mit dem zweiten Ruderblattsegment 11, welches den vorderen Ruderblattabschnitt 15 darstellt, einstückig ausgebildet sein. Jedoch ist es auch möglich, dass der Ruderblattsohlenabschnitt 21 ein eigenständiges Ruderblattsegment ist. Das dritte Ruderblattsegment 12 weist eine Endleiste 23 auf. Die Außenwandungen 24 des hinteren Ruderblattabschnitts 16, beziehungsweise des dritten Ruderblattabschnitts 12, sind eben ausgebildet. Das als Zwischenabschnitt 17 ausgebildete vierte Ruderblattsegment, welches auch "Semi-flat Piece" genannt werden kann, weist im Wesentlichen leicht gekrümmte Außenwandungen 25 auf. Erstes Ruderblattsegment 10, zweites Ruderblattsegment 11 und drittes Ruderblattsegment 12 fassen in der dargestellten Anordnung den Zwischenabschnitt 17 beziehungsweise das vierte Ruderblattsegment 13 ein. Bei dem dargestellten Ruder 100 handelt es sich um ein twistiertes Ruder. Das heißt, dass der obere Abschnitt 26a der Anströmkante 18 gegenüber einem unteren Abschnitt 26b der Anströmkante 18 versetzt ist, sodass der obere Abschnitt 26a in Richtung Backbord versetzt ist während der untere Abschnitt 26b in Richtung Steuerbord versetzt ist.

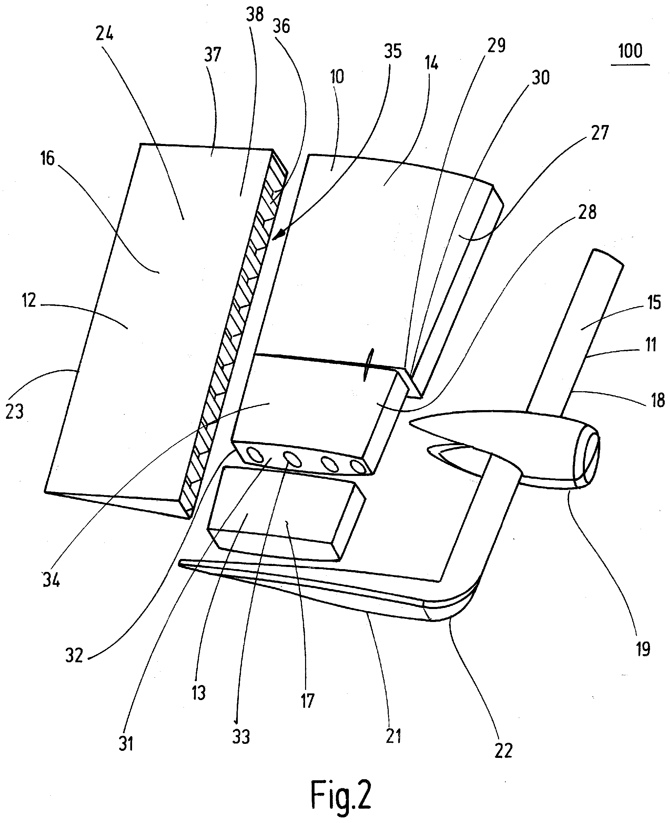

Fig. 2 zeigt eine Explosionsdarstellung des Ruders 100 mit modularem Aufbau. Das zweite Ruderblattsegment 11, welches als vorderer Ruderblattabschnitt 15 ausgebildet ist, umfasst die Anströmkante 18, die Propulsionsbirne 19 sowie den Ruderblattsohlenabschnitt 21. Das als Hauptabschnitt 14 ausgebildete erste Ruderblattsegment 10 ist aus einem ersten Untersegment 27 und einem zweiten Untersegment 28 zusammengesetzt. Das erste Untersegment 27 und das zweite Untersegment 28 sind über einen als Stabilisierungsplatte 29 ausgebildeten Verbindungskörper 30 miteinander verbunden. Auf einer Unterseite 31 des zweiten Untersegments 28 des Hauptabschnitts 14 ist ein Längsspant 32 sichtbar. Der Hauptabschnitt 14 beziehungsweise das aus dem ersten Untersegment 27 und dem zweiten Untersegment 28 zusammengesetzte erste Ruderblattsegment 10 ist in einem herkömmlichen Herstellungsverfahren durch Beplankung einer aus Längsspanten 32 und Querspanten gebildeten Skelettstruktur 33 mit einer Außenwandung 34 hergestellt.

Das zweite Ruderblattsegment 11, welches den vorderen Ruderblattabschnitt 15 bildet, ist hingegen in einem additiven oder generativen Fertigungsverfahren, insbesondere in einem 3D-Druckverfahren, hergestellt.

Das als hinterer Ruderblattabschnitt 16 ausgebildete dritte Ruderblattsegment 12 weist in einem Innenraum 35 ein Vollstahlwabenbauelement 36 auf, sodass das dritte Ruderblattsegment 12 als Leichtbauelement 37 ausgebildet ist. Das als Zwischenabschnitt 17 ausgebildete vierte Ruderblattsegment 13 kann in einem herkömmlichen Herstellungsverfahren durch Beplankung einer Skelettstruktur, in einem 3D-Druckverfahren oder mit anderen Verfahren hergestellt werden.

Aufgrund der unterschiedlichen Herstellungsverfahren sind auch die Materialien der Ruderblattsegmente 10, 11, 12, 13 unterschiedlich. So kann das mit einem 3D-Druckverfahren hergestellte zweite Ruderblattsegment 11 aus einem Kunststoff oder einem Metall bestehen. Der in einem bekannten Herstellungsverfahren hergestellte Hauptabschnitt 14 ist hingegen aus Stahl hergestellt. Der hintere Ruderblattabschnitt 16 kann ebenfalls mit einem herkömmlichen oder bekannten Herstellungsverfahren hergestellt sein. Jedoch ist es auch möglich, dass der hintere Ruderblattabschnitt 16 aus einem Kunststoff hergestellt ist oder einen Kunststoff umfasst.

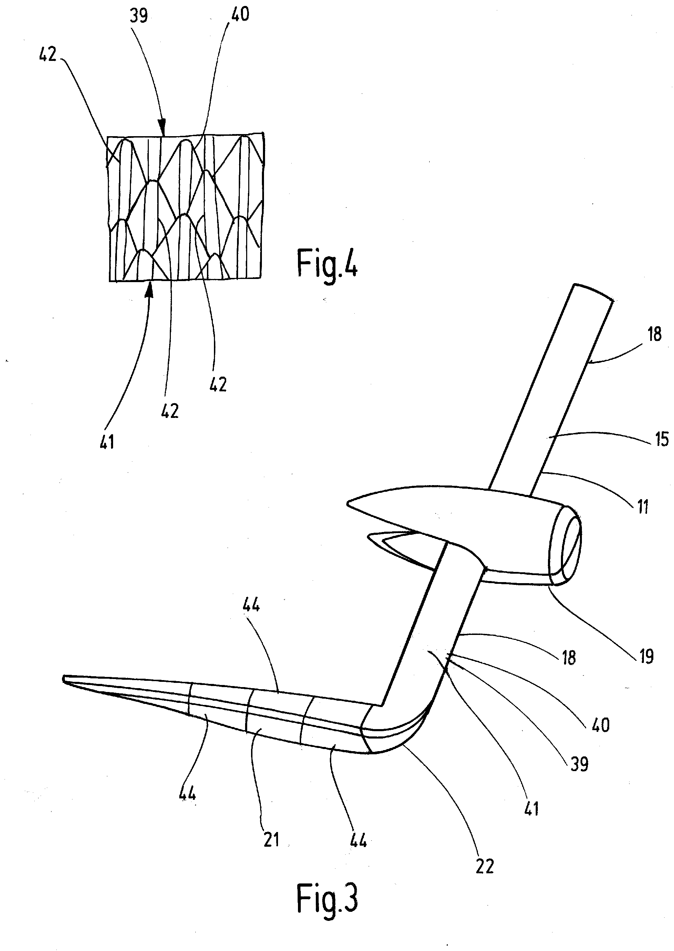

Fig. 3 zeigt das als vorderen Ruderblattabschnitt 15 ausgebildete zweite Ruderblattsegment 11 in einer perspektivischen Ansicht. In der in Fig. 3 gezeigten Ausführungsform weist das zweite Ruderblattsegment 11 eine strukturierte Oberfläche 39 auf. Insbesondere ist die Anströmkante 18 mit der strukturierten Oberfläche 39 versehen. Die strukturierte Oberfläche 39 weist dabei bionische Strukturen 40 auf. Die bionischen Strukturen 40 können beispielsweise als eine Haihautstruktur 41 ausgebildet sein.

In der Detailansicht Fig. 4 ist ein Abschnitt der strukturierten Oberfläche 39 der Anströmkante 18 dargestellt. Die eine Haihautstruktur 41 umfassende bionische Struktur 40 weist mehrere Erhebungen 42 auf.

Die strukturierte Oberfläche 39 beziehungsweise die bionische Struktur 40 der Anströmkante 18 des zweiten Ruderblattsegments 11 wird vorteilhafterweise im selben Herstellungsschritt wie das zweite Ruderblattsegments 11 durch ein generatives, additives oder 3D-Druckverfahren gleichzeitig hergestellt. Die bionischen Strukturen 40 müssen somit nicht nachträglich, beispielsweise mittels eines Fräsverfahrens aus dem zweiten Ruderblattsegment 11 herausgearbeitet werden.

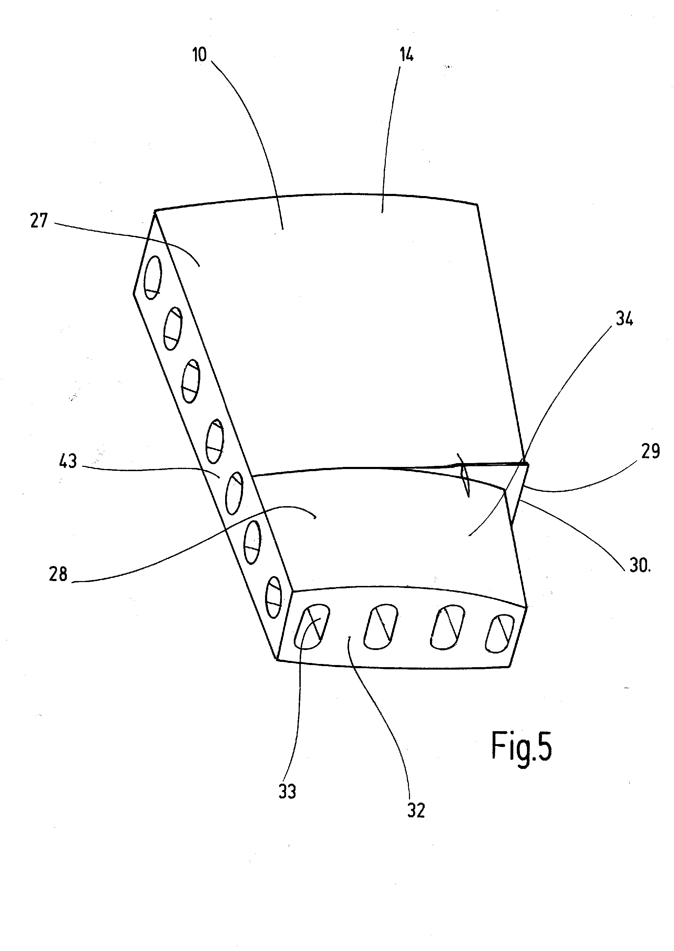

Fig. 5 zeigt den Hauptabschnitt 14 in einer perspektivischen Ansicht. Der Hauptabschnitt 14 ist aus einem ersten Untersegment 27 und einem zweiten Untersegment 28 zusammengesetzt, welche über eine Stabilisierungsplatte 29 miteinander verbunden sind. Im Inneren des Hauptabschnitts 14 ist eine Skelettstruktur 33 aus Längsspanten 32 und Querspanten 43 angeordnet, welche mit einer Außenwandung 34 versehen ist.

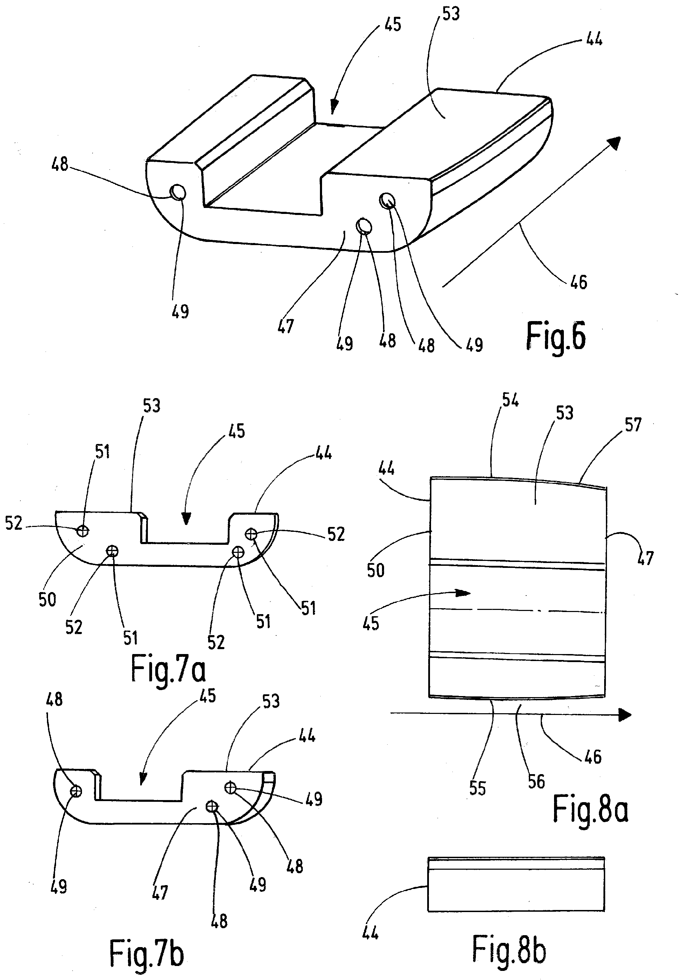

Zurückkehrend zur Fig. 3 ist erkennbar, dass der Ruderblattsohlenabschnitt 21 des zweiten Ruderblattsegments 11 ebenfalls aus mehreren Untersegmenten 44 zusammengesetzt ist. Ein Untersegment 44 des Ruderblattsohlenabschnitts 21 ist in einer perspektivischen Ansicht in Fig. 6 dargestellt. Das Untersegment 44 des Ruderblattsohlenabschnitts 21 ist in etwa U-förmig ausgebildet und weist eine Aussparung oder Nut 45 auf, welche in einer Längsrichtung 46 des Untersegments 44 verläuft. Die Nut 45 ist dabei nicht zentral, sondern leicht versetzt in dem Untersegment 44 verlaufend angeordnet. Eine erste Stirnseite 47 des Untersegments 44 weist als Aufnahmeöffnungen 48 ausgebildete Verbindungsmittel 49 auf.

In den Fig. 7a und 7b ist das Untersegment 44 in einer Vorderansicht (Fig. 7a) und in einer Rückansicht (Fig. 7b) dargestellt. In der Vorderansicht ist eine zweite Stirnseite 50 des Untersegments 44 gezeigt. In der zweiten Stirnseite 50 befinden sich ebenfalls als Aufnahmeöffnungen 51 ausgebildete Verbindungsmittel 52. In der in Fig. 7b gezeigten Rückansicht sind erneut die Verbindungsmittel 49 in der ersten Stirnseite 47 dargestellt.

Fig. 8a und 8b zeigen eine Aufsicht (Fig. 8a) und eine Seitenansicht (Fig. 8b) auf das Untersegment 44. Deutlich erkennbar ist die nicht zentral angeordnete Nut 45 in einer Oberseite 53 des Untersegments 44. Mehrere Untersegmente 44 können derart angeordnet werden, dass eine erste Stirnseite 47 eines ersten Untersegments 44 mit einer zweiten Stirnseite 50 eines zweiten Untersegments 44 in berührende Anlage kommt. In die Aufnahmeöffnungen 48, 51 können dann nicht dargestellte Rasthaken oder Klickverbindungselemente oder gegebenenfalls Schrauben geführt werden und somit mehrere Untersegmente 44 zur Ausbildung eines Ruderblattsohlenabschnitts 21 miteinander verbunden werden.

Das Untersegment 44 ist als Teil des zweiten Ruderblattsegments 11 ebenfalls in einem 3D-Druckverfahren hergestellt. Das Material ist vorzugsweise PET-G oder ABS. In der Aufsicht in Fig. 8a ist ferner zu erkennen, dass der Verlauf einer ersten Seite 54 stärker gekrümmt ist als der Verlauf einer zweiten, der ersten Seite 54 gegenüberliegenden Seite 55. Der unterschiedliche Verlauf entspricht dem unterschiedlichen Verlauf der Seiten des Ruderblatts 100, welches als twistiertes Ruder ausgebildet ist und somit eine Druckseite 56 und eine Saugseite 57 aufweist.

### Liste der Bezugszeichen

- 100: Ruderblatt

- 10: Erstes Ruderblattsegment
- 11: Zweites Ruderblattsegment
- 12: Drittes Ruderblattsegment
- 13: Viertes Ruderblattsegment
- 14: Hauptabschnitt
- 15: Vorderer Ruderblattabschnitt
- 16: Hinterer Ruderblattabschnitt
- 17: Zwischenabschnitt
- 18: Anströmkante
- 19: Propulsionsbirne

- 20: Unterer Bereich
- 21: Ruderblattsohlenabschnitt
- 22: Radius
- 23: Endleiste
- 24: Außenwandung
- 25: Außenwandung
- 26a: Oberer Abschnitt
- 26b: Unterer Abschnitt
- 27: Erstes Untersegment
- 28: Zweites Untersegment
- 29: Stabilisierungsplatte

- 30: Verbindungskörper
- 31: Unterseite
- 32: Längsspant
- 33: Skelettstruktur
- 34: Außenwandung
- 35: Innenraum
- 36: Wabenelement
- 37: Leichtbauelement
- 38: Paneel
- 39: Strukturierte Oberfläche

- 40: Bionische Struktur
- 41: Haihautstruktur
- 42: Erhebung
- 43: Querspant
- 44: Untersegment
- 45: Nut
- 46: Längsrichtung
- 47: Erste Stirnseite
- 48: Aufnahmeöffnung
- 49: Verbindungsmittel

- 50: Zweite Stirnseite
- 51: Aufnahmeöffnung
- 52: Verbindungsmittel
- 53: Oberseite
- 54: Erste Seite
- 55: Zweite Seite
- 56: Druckseite
- 57: Saugseite

## Patentansprüche

1. Ruderblatt (100) **gekennzeichnet durch** einen modularen Aufbau, wobei das Ruderblatt mindestens zwei vorgefertigte Ruderblattsegmente (10, 11, 12, 13) umfasst und aus den mindestens zwei vorgefertigten Ruderblattsegmenten (10, 11, 12, 13) zusammengesetzt ist, wobei das Ruderblatt einen Hauptabschnitt (14) zur Anbindung an einen Ruderschaft und einen vorderen Ruderblattabschnitt (15) mit einer Anströmkante (18) aufweist, wobei der Hauptabschnitt (14) ein erstes Ruderblattsegment (10) ist und wobei der vordere Ruderblattabschnitt (15) ein zweites Ruderblattsegment (11) ist, wobei der Hauptabschnitt (14) aus einem anderen Material besteht und durch ein anderes Herstellungsverfahren hergestellt ist als der vordere Ruderblattabschnitt (15), **dadurch gekennzeichnet, dass** der vordere Ruderblattabschnitt (15) eine Oberfläche mit bionischen Strukturen (40) aufweist, wobei die bionischen Strukturen (40) ausgebildet sind, einen Strömungswiderstand zu senken.

2. Ruderblatt (100) nach Anspruch 1,
wobei das Ruderblatt (100) einen hinteren Ruderblattabschnitt (16) mit einer Endleiste (23) aufweist, wobei dass das Ruderblatt mindestens drei vorgefertigte Ruderblattsegmente (10, 11, 12, 13) umfasst und aus den mindestens drei vorgefertigten Ruderblattsegmenten (10, 11, 12, 13) zusammengesetzt ist, wobei der hintere Ruderblattabschnitt (16) ein drittes Ruderblattsegment (12) umfasst oder ist,
und/oder wobei Ruderblatt einen Zwischenabschnitt (17) aufweist, wobei das Ruderblatt mindestens vier vorgefertigte Ruderblattsegmente (10, 11, 12, 13) umfasst und aus den mindestens vier vorgefertigten Ruderblattsegmenten (10, 11, 12, 13) zusammengesetzt ist, wobei der Zwischenabschnitt (17) ein viertes Ruderblattsegment (13) umfasst oder ist.

3. Ruderblatt (100) nach Anspruch 1 oder 2, **dadurch gekennzeichnet, dass** mindestens ein Ruderblattsegment (10, 11, 12, 13), insbesondere das erste Ruderblattsegment (10), eine Schweißkonstruktion mit Querspanten (43) und Längsspanten (32) ist, und/oder dass mindestens ein Ruderblattsegment (10, 11, 12, 13), insbesondere das zweite Ruderblattsegment (11), mit einem generativen Fertigungsverfahren und/oder einem additiven Fertigungsverfahren, insbesondere mit einem 3D-Druckverfahren, hergestellt ist.

4. Ruderblatt (100) nach einem der vorgenannten Ansprüche, **dadurch gekennzeichnet, dass** die bionische Struktur (40) eine Haihautstruktur (41) ist und/oder dass die bionische Struktur (40) eine Flossenstruktur, insbesondere eine Walflossenstruktur, ist.

5. Ruderblatt (100) nach einem der vorgenannten Ansprüche, **dadurch gekennzeichnet, dass** mindestens eines der mindestens zwei Ruderblattsegmente (10, 11, 12, 13), bevorzugt das erste Ruderblattsegment (10) und/oder das zweite Ruderblattsegment (11) und/oder das dritte Ruderblattsegment (12) und/oder das vierte Ruderblattsegment (13), mindestens zwei Untersegmente (27, 28, 44) umfasst, wobei bevorzugt das erste Ruderblattsegment (10) ein erstes Untersegment (27) und ein zweites Untersegment (28) aufweist und aus dem ersten Untersegment (27) und dem zweiten Untersegment (28) zusammengesetzt ist, wobei besonders bevorzugt zwischen dem ersten Untersegment (27) und dem zweiten Untersegment (28) ein Verbindungskörper (30), insbesondere eine Stabilisierungsplatte (29), angeordnet ist.

6. Ruderblatt (100) nach einem der vorgenannten Ansprüche, **dadurch gekennzeichnet, dass** die bionischen Strukturen (40) in einem generativen Fertigungsverfahren und/oder einem additiven Fertigungsverfahren, insbesondere in einem 3D-Druckverfahren, und oder durch ein materialabtragendes Verfahren, insbesondere ein Fräßverfahren, und/oder durch ein Gußverfahren hergestellt sind.

7. Ruderblatt (100) nach einem der vorgenannten Ansprüche, **dadurch gekennzeichnet, dass** der vordere Ruderblattabschnitt (15) einen Ruderblattsohlenabschnitt (21) aufweist.

8. Ruderblatt (100) nach Anspruch 7, dass der Ruderblattsohlenabschnitt (21) aus Untersegmenten (44) zusammengesetzt ist, wobei die Untersegmente (44) bevorzugt in etwa U-förmig ausgebildet sind und eine in einer Längsrichtung (46) verlaufende Aussparung oder Nut (45) zur Anbindung an ein weiteres Ruderblattsegment aufweisen, und/oder wobei die Untersegmente (44) eine erste Stirnseite (47) und eine zweite Stirnseite (50) aufweisen, wobei in der ersten Stirnseite (47) und der zweiten Stirnseite (50) Verbindungsmittel (49, 52) angeordnet sind, zur Verbindung von jeweils zwei Untersegmenten (44) an deren Stirnseiten (47, 50).

9. Verfahren zur Herstellung eine Ruderblatts (100) nach einem der vorgenannten Ansprüche in modularer Bauweise, umfassend die Schritte:
- Anfertigen eines ersten Ruderblattsegments (10),
- Anfertigen eines zweiten Ruderblattsegments (11)
- Zusammenfügen mindestens des ersten Ruderblattsegments (10) und des zweiten Ruderblattsegments (11),
wobei das erste Ruderblattsegment (10) ein Hauptabschnitt (14) eines Ruderblatts (100) ist, und wobei das zweite Ruderblattsegment (11) ein vorderer Ruderblattabschnitt (15) ist, wobei der Hauptabschnitt (14) aus einem anderen Material besteht und durch ein anderes Herstellungsverfahren hergestellt wird als der vordere Ruderblattabschnitt (15), und wobei das erste Ruderblattsegment (10) in einem Schweißverfahren durch Beplankung einer Skelettstruktur (33) aus Querspanten (43) und Längsspanten (32) hergestellt wird, und wobei das zweite Ruderblattsegment (11) mit einem generativen Fertigungsverfahren und/oder einem additiven Fertigungsverfahren hergestellt wird, **dadurch gekennzeichnet, dass** das zweite Ruderblattsegment (11) bionische Strukturen (40) aufweist, wobei die bionischen Strukturen (40) ausgebildet sind, einen Strömungswiderstand zu senken.

10. Verfahren nach Anspruch 9, **dadurch gekennzeichnet, dass** das generative Fertigungsverfahren und/oder das additive Fertigungsverfahren ein 3D-Druckverfahren ist.

## Claims

1. Rudder blade (100) **characterized by** a modular structure, wherein the rudder blade comprises at least two prefabricated rudder blade segments (10, 11, 12, 13) and is assembled from the at least two prefabricated rudder blade segments (10, 11, 12, 13), wherein the rudder blade has a main section (14) for connection to a rudder stock and a front rudder blade section (15) with a leading edge (18), wherein the main section (14) is a first rudder blade segment (10) and wherein the front rudder blade section (15) is a second rudder blade segment (11), wherein the main section (14) consists of a different material and is produced by a different production method than the front rudder blade section (15), **characterized in that** the front rudder blade section (15) has a surface with bionic structures (40), wherein the bionic structures (40) are configured for reducing a flow resistance.

2. Rudder blade (100) according to claim 1,
wherein the rudder blade (100) has a rear rudder blade section (16) with an end strip (23), wherein the rudder blade comprises at least three prefabricated rudder blade segments (10, 11, 12, 13) and is assembled of the at least three prefabricated rudder blade segments (10, 11, 12, 13), wherein the rear rudder blade section (16) comprises or is a third rudder blade segment (12),
and/or wherein the rudder blade has an intermediate section (17), wherein the rudder blade comprises at least four prefabricated rudder blade segments (10, 11, 12, 13) and is assembled of the at least four prefabricated rudder blade segments (10, 11, 12, 13), wherein the intermediate section (17) comprises or is a fourth rudder blade segment (13).

3. Rudder blade (100) according to claim 1 or 2, **characterized in that** at least one rudder blade segment (10, 11, 12, 13), in particular the first rudder blade segment (10), is a welded construction with transverse frames (43) and longitudinal frames (32), and/or **in that** at least one rudder blade segment (10, 11, 12, 13), in particular the second rudder blade segment (11), is produced with a generative production method and/or an additive production method, in particular with a 3D printing method.

4. Rudder blade (100) according to one of the preceding claims, **characterized in that** the bionic structure (40) is a sharkskin structure (41) and/or **in that** the bionic structure (40) is a fin structure, in particular a whale fin structure.

5. Rudder blade (100) according to one of the preceding claims, **characterized in that** at least one of the at least two rudder blade segments (10, 11, 12, 13), preferably the first rudder blade segment (10) and/or the second rudder blade segment (11) and/or the third rudder blade segment (12) and/or the fourth rudder blade segment (13), comprises at least two subsegments (27, 28, 44), wherein preferably the first rudder blade segment (10) has a first sub-segment (27) and a second sub-segment (28) and is assembled of the first sub-segment (27) and the second sub-segment (28), wherein particularly preferably a connecting body (30), in particular a stabilizing plate (29), is arranged between the first sub-segment (27) and the second sub-segment (28).

6. Rudder blade (100) according to one of the preceding claims, **characterized in that** the bionic structures (40) are produced in a generative production method and/or an additive production method, in particular in a 3D printing method, and or by a material-removing method, in particular a milling method, and/or by a casting method.

7. Rudder blade (100) according to one of the preceding claims, **characterized in that** the front rudder blade section (15) has a rudder blade sole section (21).

8. Rudder blade (100) according to claim 7, in that the rudder blade sole section (21) is assembled of sub-segments (44), wherein the sub-segments (44) are preferably formed approximately U-shaped and have a recess or groove (45) running in a longitudinal direction (46) for connection to a further rudder blade segment, and/or wherein the sub-segments (44) have a first end face (47) and a second end face (50), wherein connecting means (49, 52) are arranged in the first end face (47) and the second end face (50) for connecting two sub-segments (44) each at their end faces (47, 50).

9. Method for producing a rudder blade (100) according to one of the preceding claims in modular construction, comprising the steps of:
- Making a first rudder blade segment (10),
- Making a second rudder blade segment (11)
- Assembling at least the first rudder blade segment (10) and the second rudder blade segment (11),
wherein the first rudder blade segment (10) is a main section (14) of a rudder blade (100), and wherein the second rudder blade segment (11) is a front rudder blade section (15), wherein the main section (14) consists of a different material and is produced with a different production method than the front rudder blade section (15), and wherein the first rudder blade segment (10) is produced in a welding method by planking a skeleton structure (33) of transverse frames (43) and longitudinal frames (32), and wherein the second rudder blade segment (11) is produced with a generative production method and/or an additive production method, **characterized in that** the second rudder blade segment (11) has bionic structures (40), wherein the bionic structures (40) are configured for reducing a flow resistance.

10. Method according to claim 9, **characterized in that** the generative production method and/or the additive production method is a 3D printing method.

## Revendications

1. Safran de gouvernail (100) **caractérisé par** une structure modulaire, le safran comprenant au moins deux segments de safran préfabriqués (10, 11, 12, 13) et étant assemblé à partir des au moins deux segments de safran préfabriqués (10, 11, 12, 13), le safran présentant une partie principale (14) destinée à être reliée à une tige de safran et une partie avant de safran (15) avec un bord d'attaque (18), la partie principale (14) étant un premier segment de safran (10) et la partie avant de safran (15) étant un deuxième segment de safran (11), la partie principale (14) étant constituée d'un matériau différent et étant fabriquée par un procédé de fabrication différent de celui de la partie avant de safran (15), **caractérisé en ce que** la partie avant de safran de gouvernail (15) a une surface avec des structures bioniques (40), les structures bioniques (40) étant adaptées pour réduire une résistance à l'écoulement.

2. Safran de gouvernail (100) selon la revendication 1,
dans lequel le safran de gouvernail (100) présente une partie de safran de gouvernail arrière (16) avec une barre d'extrémité (23), dans lequel le safran de gouvernail comprend au moins trois segments de safran de gouvernail préfabriqués (10, 11, 12, 13) et est composée des au moins trois segments de safran de gouvernail préfabriqués (10, 11, 12, 13), dans lequel la partie de safran de gouvernail arrière (16) comprend ou est un troisième segment de safran de gouvernail (12),
et/ou dans lequel le safran de gouvernail présente une partie intermédiaire (17), le safran de gouvernail comprenant au moins quatre segments de safran de gouvernail préfabriqués (10, 11, 12, 13) et étant composée des au moins quatre segments de safran de gouvernail préfabriqués (10, 11, 12, 13), la partie intermédiaire (17) comprenant ou étant un quatrième segment de safran de gouvernail (13).

3. Safran de gouvernail (100) selon la revendication 1 ou 2, **caractérisé en ce qu'**au moins un segment de safran (10, 11, 12, 13), en particulier le premier segment de safran (10), est une construction soudée avec des membrures transversales (43) et des membrures longitudinales (32), et/ou **en ce qu'**au moins un segment de safran (10, 11, 12, 13), en particulier le deuxième segment de safran (11), est fabriqué avec un procédé de fabrication générative et/ou un procédé de fabrication additive, en particulier avec un procédé d'impression 3D.

4. Safran de gouvernail (100) selon l'une des revendications précédentes, **caractérisé en ce que** la structure bionique (40) est une structure de peau de requin (41) et/ou **en ce que** la structure bionique (40) est une structure d'aileron, en particulier une structure d'aileron de baleine.

5. Safran de gouvernail (100) selon l'une des revendications précédentes, **caractérisé en ce qu'**au moins l'un des au moins deux segments de safran (10, 11, 12, 13), de préférence le premier segment de safran (10) et/ou le deuxième segment de safran (11) et/ou le troisième segment de safran (12) et/ou le quatrième segment de safran (13), comprend au moins deux sous-segments (27, 28, 44), de préférence le premier segment de safran (10) présentant un premier sous-segment (27) et un deuxième sous-segment (28) et étant composé du premier sous-segment (27) et du deuxième sous-segment (28), un corps de liaison (30), en particulier une plaque de stabilisation (29), étant disposé de manière particulièrement préférée entre le premier sous-segment (27) et le deuxième sous-segment (28).

6. Safran de gouvernail (100) selon l'une des revendications précédentes, **caractérisé en ce que** les structures bioniques (40) sont fabriquées par un procédé de fabrication générative et/ou un procédé de fabrication additive, en particulier un procédé d'impression 3D, et ou par un procédé d'enlèvement de matière, en particulier un procédé de fraisage, et/ou par un procédé de coulée.

7. Safran de gouvernail (100) selon l'une des revendications précédentes, **caractérisé en ce que** la partie avant du safran (15) comprend une partie de semelle de safran (21).

8. Safran de gouvernail (100) selon la revendication 7, en ce que la section de semelle de safran (21) est composée de sous-segments (44), les sous-segments (44) étant de préférence réalisés à peu près en forme de U et présentant un évidement ou une rainure (45) s'étendant dans une direction longitudinale (46) pour la liaison à un autre segment de safran , et/ou les segments inférieurs (44) présentant un premier côté frontal (47) et un deuxième côté frontal (50), des moyens de liaison (49, 52) étant disposés dans le premier côté frontal (47) et le deuxième côté frontal (50) pour relier respectivement deux segments inférieurs (44) à leurs côtés frontaux (47, 50).

9. Procédé de fabrication d'un safran de gouvernail (100) selon l'une des revendications précédentes, de construction modulaire, comprenant les étapes suivantes :
- fabrication d'un premier segment de safran (10),
- fabrication d'un deuxième segment de safran (11)
- assembler au moins le premier segment de safran (10) et le deuxième segment de safran (11),
dans lequel le premier segment de safran (10) est une partie principale (14) d'un safran (100), et dans lequel le second segment de safran (11) est une partie avant de safran (15), la partie principale (14) étant constituée d'un matériau différent et étant fabriquée par un procédé de fabrication différent de celui de la partie avant de safran (15), et dans lequel le premier segment de safran de gouvernail (10) est fabriqué par un procédé de soudage par revêtement d'une structure de squelette (33) constituée de membrures transversales (43) et de membrures longitudinales (32), et dans lequel le deuxième segment de safran de gouvernail (11) est fabriqué par un procédé de fabrication générative et/ou un procédé de fabrication additive, **caractérisé en ce que** le deuxième segment de safran de gouvernail (11) présente des structures bioniques (40), les structures bioniques (40) étant conçues pour abaisser une résistance à l'écoulement.

10. Procédé selon la revendication 9, **caractérisé en ce que** le procédé de fabrication générative et/ou le procédé de fabrication additive est un procédé d'impression 3D.
